# EUROPEAN PATENT APPLICATION

(11) **EP 2 822 307 A1**
(43) Date of publication of application: **07.01.2015**
(21) Application number: 13793443.6
(22) Date of filing: 08.01.2013
(51) Int. Cl.: H04W 4/24

(54) **CHARGING METHOD AND DEVICE**

(30) Priority: 24.05.2012 CN 201210164238
(71) Applicant: Huawei Technologies Co., Ltd., Shenzhen, Guangdong 518129 (CN)
(72) Inventor: JIN, Lei, Shenzhen Guangdong 518129 (CN); ZHANG, Yongjing, Shenzhen Guangdong 518129 (CN); YIN, Jiaxin, Shenzhen Guangdong 518129 (CN); LIN, Qi, Shenzhen Guangdong 518129 (CN)
(74) Representative: Isarpatent
(86) International application number: PCT/CN2013/070186
(87) International publication number: WO 2013/174153

(57) **Abstract**

Embodiments of the present invention provide a charging method and apparatus for machine-to-machine communications. The method includes: receiving, by an M2M service capability layer, a resource access request, where the resource access request includes a destination identifier; determining, according to the resource access request, that current resource access needs to use an underlying network and the current resource access is a charging event; sending the resource access request to a main service capability layer according to the destination identifier; receiving a resource access response with respect to the resource access request, and determining charging data for the current resource access; and sending the charging data to a charging server. According to the charging method and apparatus provided by the embodiments of the present invention, the M2M service capability layer determines the charging data according to the resource access request sent by a request initiator, and sends the charging data to the charging server for charging the request initiator, thereby addressing a charging problem that arises when the request initiator uses the underlying network in a case in which the request initiator does not subscribe to the underlying network.

## Description

This application claims priority to Chinese Patent Application No. 201210164238.9, filed with the Chinese Patent Office on May 24, 2012 and entitled "CHARGING METHOD AND APPARATUS", which is incorporated herein by reference in its entirety.

### TECHNICAL FIELD

The present invention relates to the communications field, and in particular, to a charging method and apparatus.

### BACKGROUND

Machine-to-machine communications (Machine-to-Machine Communications, M2M) is a network-based application and service focusing on intelligent interaction between machines. By embedding a wireless or wired communication module and application processing logic in a machine, M2M implements data communication without manual operations and meets users' informatization requirements in aspects such as monitoring, commanding and scheduling, data collection, and measurement.

The European Telecommunications Standards Institute for Machine-to-Machine Communications (European Telecommunications Standards Institute for Machine-to-Machine Communications, ETSI M2M) defines a mId interface between an M2M platform and an M2M gateway. Based on the M2M platform, an M2M network application (NA, Network Application) is capable of accessing, by using the mId interface, an M2M device application (DA, Device Application) installed on an M2M device.

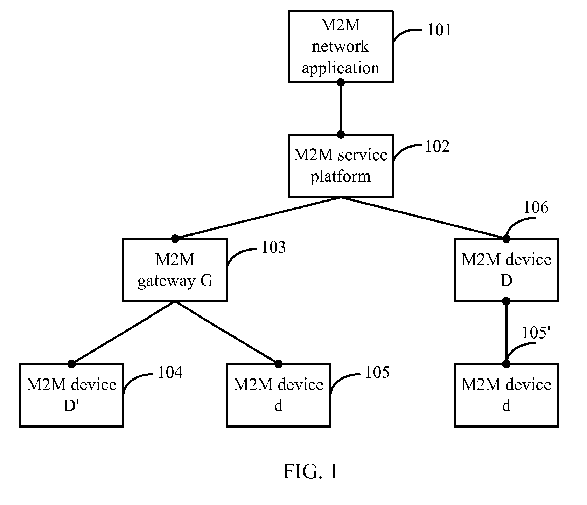

FIG. 1 shows a typical ETSI M2M system architecture. Various types of M2M devices (for example, a sensor and a microcontroller) directly access the M2M platform or remotely access the M2M platform through an M2M gateway. Depending on whether the M2M devices comply with ETSI M2M specifications, the M2M devices are classified into traditional devices d and devices D and D' in compliance with the ETSI M2M specifications. The traditional devices d refer to a batch of traditional devices (such as an automated meter reading device in the electricity industry and a water quality monitoring device) manufactured by some industry manufacturers in the M2M industry according to respective industry standards or the manufacturers' proprietary standards, not included in ETSI M2M standards. Depending on whether the M2M devices in compliance with the ETSI M2M specifications provide a service capability layer (SCL, Service Capability Layer) defined in the ETSI M2M standards, the M2M devices are classified into devices D with an SCL and devices D' without the SCL.

The M2M gateway interworks with a traditional device d and an M2M device D' by using a gateway interworking proxy function (GIP, Gateway Interworking Proxy) in a wireless or wired communication manner (for example, Zigbee, Bluetooth, DLMS/COSEM, Zwave, BACnet, ANSI C12, and mBus). However, the mId interface between the M2M gateway and the M2M platform generally employs a wireless or wired wide area local area network for communication (for example, xDSL, HFC, satellite, GERAN, UTRAN, eUTRAN, W-LAN and WiMAX). A device D with the SCL may also function as the M2M gateway and interwork with the traditional device d and M2M device D' based on principles of the M2M gateway. Various types of M2M network applications (for example, electricity meter reading and intelligent transportation) are registered with the M2M platform; and access (including creating, acquiring, updating, and deleting), by using the mId interface, data collected by an M2M device, or perform remote device management on the M2M device.

In practical operation of an M2M network, charging is required for use of a service resource of an M2M device (for example, resource storage of a network application on a platform, registration and use of a D' device at a gateway, acquiring of a remote service resource by a d device) and use of a network resource of an M2M device, so as to record resource usage of the M2M device and then complete further charging.

For service charging, a charging function is supported on an ETSI platform. The function is implemented to collect and record usage of a service resource and send the collected and recorded usage of the service resource to a service charging system, to complete online charging (Online Charging) and offline charging (Offline Charging) for a service. For charging for use of a network resource, a service convergence node deployed by an underlying network operator (Operator) monitors, collects, and records a use condition of the network resource of an M2M device, and sends the use condition of the network resource to an underlying network charging system, to complete online charging (Online Charging) and of-fline charging (Offline Charging) for the network resource.

As mentioned above, because the traditional device d and the D' device do not support a wired/wireless wide area network with the mId interface, the devices do not have a mId communication module. The devices are only connected to and registered with the gateway and implement remote service resource access by using the mId interface based on an underlying network capability of the gateway.

The gateway needs to support use of an underlying network resource by the traditional device d and the D' device. However, because d device and D' device neither have support of the mId communication module nor subscribe to an underlying network, charging cannot be separately performed on the traditional device d and the D' on the underlying network, but can only be uniformly performed on the M2M gateway. Fees are all charged to the gateway. Charging cannot be performed on d and D' for using the underlying network resource. Likewise, network applications NAs also have a similar problem. The NAs do not support the wired/wireless wide area network with the mId interface and do not have the communication module. The network applications are only connected to and registered with the M2M platform and implement remote service resource access by using the mId interface based on an underlying network capability of the M2M platform.

The M2M platform needs to support use of an underlying network resource by the NAs. However, because the NAs neither have support of the mId communication module nor subscribe to the underlying network, charging cannot be separately performed on the NAs on the underlying network for using the underlying network resource, but can only be performed on the M2M platform.

### SUMMARY

In view of the above, it is necessary to provide a charging method to charge an initiator (for example, a traditional device d, a D', and a network application NA) of a resource access request on an M2M network.

Meanwhile, a charging apparatus is provided.

A charging method according to an embodiment of the present invention includes: receiving, by an M2M service capability layer, a resource access request, where the resource access request includes a destination identifier; determining, by the service capability layer according to the resource access request, that current resource access needs to use an underlying network and the current resource access is a charging event; sending, by the service capability layer, the resource access request to a main service capability layer according to the destination identifier; receiving, by the service capability layer, a resource access response with respect to the resource access request; determining, by the service capability layer, charging data for the current resource access; and sending, by the service capability layer, the charging data to a charging server, so that the charging server charges for the resource access request of a request initiator according to the charging data.

A charging apparatus according to an embodiment of the present invention includes: a transceiver unit, configured to receive a resource access request, where the resource access request includes a destination identifier; a determining unit, configured to determine, according to the resource access request, that current resource access needs to use an underlying network and the current resource access is a charging event; the transceiver unit, further configured to forward the resource access request to a main service capability layer according to the destination identifier, and further configured to receive a resource access response with respect to the resource access request; and a charging unit, configured to determine charging data for the current resource access, and send the charging data to a charging server. According to the charging method and apparatus provided by the embodiments of the present invention, the M2M service capability layer determines the charging data according to the resource access request sent by the request initiator, and sends the charging data to the charging server to charge the request initiator, thereby addressing a charging problem that arises when the request initiator uses the underlying network without subscribing to the underlying network.

### BRIEF DESCRIPTION OF DRAWINGS

FIG. 1 is a schematic structural diagram of an M2M system in the prior art;
FIG. 2 is a flowchart of a charging method according to an embodiment of the present invention;
FIG. 3 is a diagram of signaling exchanges in a charging method according to another embodiment of the present invention;
FIG. 4 is a diagram of signaling exchanges in a charging method according to still another embodiment of the present invention;
FIG. 5 is a diagram of signaling exchanges in a charging method according to still another embodiment of the present invention;
FIG. 6 is a diagram of signaling exchanges in a charging method according to still another embodiment of the present invention;
FIG. 7A is a schematic structural diagram of a charging apparatus according to an embodiment of the present invention;
FIG. 7B is a schematic structural diagram of a charging apparatus according to another embodiment of the present invention;
FIG. 7C is a schematic structural diagram of a charging apparatus according to still another embodiment of the present invention;
FIG. 7D is a schematic structural diagram of a charging apparatus according to yet another embodiment of the present invention;
FIG. 7E is a schematic structural diagram of a charging apparatus according to still another embodiment of the present invention; and
FIG. 7F is a schematic structural diagram of still another charging apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments derived by a person of ordinary skill in the art based on the embodiments of the present invention without creative efforts shall fall within the protection scope of the present invention.

FIG. 1 is a schematic structural diagram of an M2M system in the prior art, including:
an M2M network application (NA) 101, configured to register with an M2M service platform 102 and access, by using a mId interface, data collected by an M2M device, and further configured to perform remote device management on the M2M device;
an M2M device D'104, connected to the M2M service platform 102 through an M2M gateway G103;
an M2M device d105, connected to the M2M service platform 102 through the M2M gateway G103; and
an M2M device d105', connected to the M2M service platform 102 through an M2M device D106.

The M2M device d105 and the M2M device d105' are traditional devices that do not comply with ETSI M2M specifications; the M2M device D and the M2M device D' are devices that comply with the ETSI M2M specifications, where the M2M device D provides a service capability layer (SCL, Service Capability Layer) defined in ETSI M2M standards, and the M2M device D' does not provide the service capability layer (SCL, Service Capability Layer) defined in the ETSI M2M standards.

The M2M gateway G103 interworks with the M2M traditional device d and the M2M device D' by using a gateway interworking proxy function (GIP, Gateway Interworking Proxy) in a wireless or wired communication manner (for example, Zigbee, Bluetooth, DLMS/COSEM, Zwave, BACnet, ANSI C12, and mBus). However, the mId interface between either the M2M gateway or the M2M device D and the M2M platform generally employs a wired or wireless wide area local area network for communication (for example, Xdsl, HFC, satellite, GERAN, UTRAN, eUTRAN, W-LAN and WiMAX).

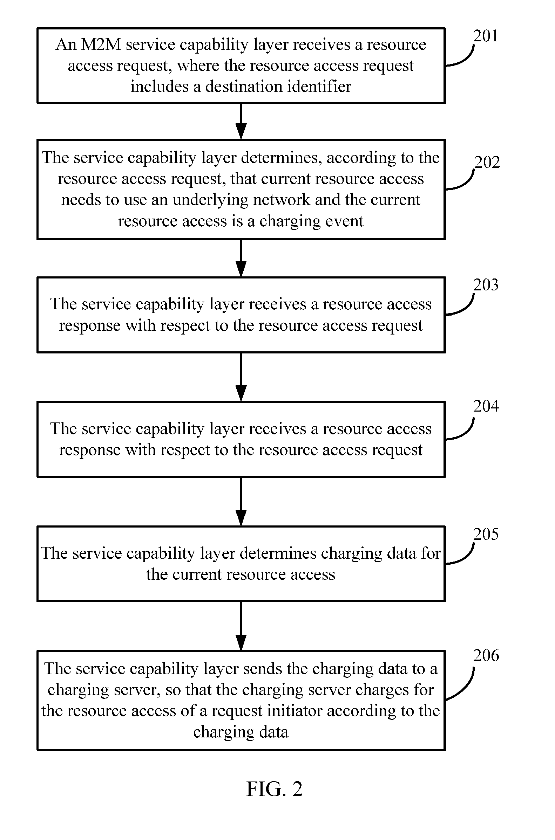

FIG. 2 is a flowchart of a charging method according to an embodiment of the present invention, including:
201. An M2M service capability layer receives a resource access request, where the resource access request includes a destination identifier.

Specifically, a local service capability layer receives the resource access request sent by an initiator (hereinafter referred to as a request initiator) of the resource access request, where the resource access request includes the destination identifier of a network entity where a remote resource is located; or an intermediate service capability layer receives the resource access request sent by the request initiator and forwarded by the local service capability layer or another intermediate service capability layer.

It should be noted that, the local service capability layer refers to a network entity that directly receives the resource access request sent by the request initiator and provides the service capability layer, which may be an M2M gateway or an M2M platform; the request initiator may be a traditional device d or an M2M device D' or a network application NA; the intermediate service capability layer refers to a network entity that does not directly receive the resource access request sent by the request initiator but receives the resource access request sent by the request initiator and forwarded by another service capability layer (including the foregoing local service capability layer or another intermediate service capability layer) and that provides the service capability layer, and may be an M2M gateway or an M2M platform. Specifically, whether the service capability layer (such as the local service capability layer and the intermediate service capability layer) directly receives the resource access request sent by the request initiator may be determined depending on consistency between an address or an identifier of the request initiator carried in the resource access request and an address or an identifier of a sender of the resource access request received by the service capability layer. For example, if the address or the identifier of the request initiator carried in the resource access request are consistent with the address or the identifier of the sender of the resource access request received by the service capability layer, the entity receiving the resource access request is the local service capability layer; on the contrary, the entity receiving the resource access request is the intermediate service capability layer.
202. The service capability layer determines, according to the resource access request, that current resource access needs to use an underlying network and the current resource access is a charging event.

Specifically, the current resource access is resource access corresponding to the resource access request. A local service capability layer or an intermediate service capability layer determines whether a resource for the current access is a remote resource (that is, a resource not located on the local service capability layer) according to the destination identifier in the resource access request; and if the resource for the current access is not stored on the local service capability layer, the resource for the current access is the remote resource, and the local service capability layer determines that the current resource access needs to use the underlying network and needs to charge the request initiator, and records the current resource access as a charging event, so as to trigger the subsequent sending of a related charging request to a charging server.

Further, the local service capability layer or the intermediate service capability layer may further determine the underlying network used for the current resource access according to a preset charging parameter corresponding to an application resource identifier of the request initiator carried in the resource access request or a charging parameter indicated by a URI of the charging parameter included in the resource access request, and determines a service type used by the current resource access request according to specific content of the access in the resource access request.
203. Send the resource access request to a main service capability layer according to the destination identifier.

Specifically, a local service capability layer or an intermediate service capability layer communicates, by using the mId interface according to the destination identifier in the access request, with the service capability layer (that is, the main service capability layer) that stores a resource requested by the resource access request for the access, and forwards the resource access request to the main service capability layer. The communication between the local service capability layer or the intermediate service capability layer and the main service capability layer is carried by the underlying network.

It should be noted that, the main service capability layer is a network entity that stores the resource requested by the resource access request for the access and provides the service capability layer, and may be an M2M platform or an M2M gateway.
204. Receive a resource access response with respect to the resource access request.

Specifically, after receiving the resource access request, the main service capability layer performs a related resource access operation, for example, creation, acquiring, an update, deletion, subscription, and device management, and sends the resource access response to a local service capability layer or an intermediate service capability layer, where the resource access response includes a status code that is used to indicate a status of the resource access. For an access request for acquiring a resource, a response may further include the resource requested for acquiring.
205. Determine charging data for the resource access.

Specifically, a local service capability layer or an intermediate service capability layer determines the charging data for the resource access of the request initiator according to the underlying network used for the current resource access, service type, and a use condition of the network resource.

Optionally, the charging data for the current resource access may include the following items of the underlying network used for the resource access: an underlying network identifier, a service type and usage of an underlying network resource, or an underlying network identifier, a service type and usage of a service unit.

When the local service capability layer or the intermediate service capability layer uses a SIM card for wireless wide area network communication, a network identifier PLMN ID may be determined according to an IMSI number of the SIM card; when the local service capability layer uses the wireless local area network for communication, a network identifier base station identifier code (BSSID) may be obtained upon network access; when the local service capability layer uses a wired wide area network for communication, a network identifier line identifier (LineID) may be obtained upon network access.

Further, the usage of the service unit may be converted from the usage of the underlying network resource according to a charging parameter that is corresponding to the underlying network and is preset on the local service capability layer or the intermediate service capability layer.
206. Send the charging data to a charging server, so that the charging server charges for the resource access of the request initiator according to the charging data.

Specifically, a local service capability layer may send an underlying network identifier, a service type and usage of an underlying network resource, or an underlying network identifier, a service type and usage of a service unit to the charging server, where the usage of the service unit may be converted from the usage of the underlying network resource according to a preset underlying network charging parameter. By using the charging parameter, network resource usage of different underlying networks and different service types may be converted to a universally-charged service unit, different charging data on the underlying network is shielded, and only the universal usage of the service unit is sent, as the charging data, to the charging server, to help the charging server charge the request initiator.

Optionally, the local service capability layer or an intermediate service capability layer may also directly send the usage of the underlying network resource to the charging server, and the charging server converts the usage of the underlying network resource to the universally-charged service unit according to the charging parameter corresponding to the underlying network, and then charges the request initiator.

It should be noted that, the foregoing steps describe only a post-paid processing process. The present invention may also be applicable to pre-paid charging processing, that is, the local service capability layer first interacts with the charging server after parsing the resource access request to determine whether the request initiator may perform communication for the current remote resource access, sends estimated charging data to the charging server for rating and confirmation, and performs processing on the resource access request of the request initiator, such as forwarding, after receiving a success response from the charging server.

In the foregoing charging method for machine-to-machine communications provided by the embodiment of the present invention, the local service capability layer determines the charging data of the request initiator according to the resource access request sent by the request initiator and the resource access response returned by the main service capability layer, and sends the charging data to the charging server to charge the request initiator, thereby addressing a charging problem of the charging initiator in a case in which the request initiator does not subscribe to the underlying network.

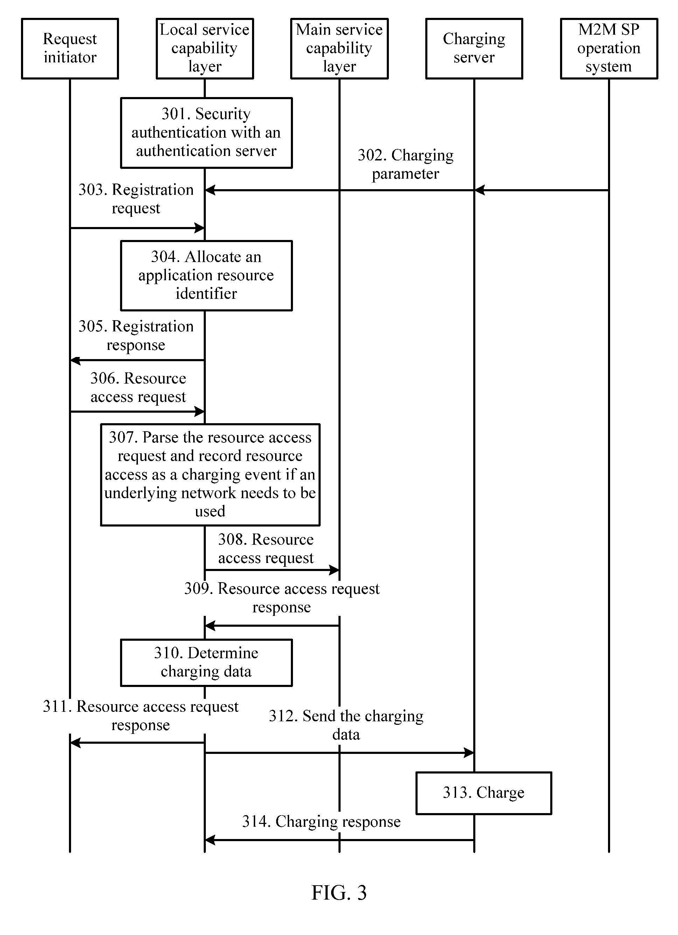

The following describes a charging method for machine-to-machine communications provided by an embodiment of the present invention by using an entire interaction process, in which a request initiator acquires a remote resource from a main service capability layer by using a local service capability layer. Referring to FIG. 3, a diagram of signaling exchanges in a charging method according to another embodiment of the present invention is provided, including:
301. The local service capability layer initiates security authentication to security authentication on an authentication server.

Specifically, the local service capability layer refers to a network entity that directly receives a resource access request sent by a request initiator and provides the service capability layer, for example, an M2M gateway or an M2M platform.

Specifically, the local service capability layer is integrated with a charging trigger function (CTF, Charging Trigger Function). However, to ensure security and reliability of the local service capability layer, the local service capability layer may function as an authorized charging trigger function entity only after the security authentication succeeds.

Optionally, the local service capability layer may initiates security authentication to the security authentication on an M2M authentication server. An M2M root key is preset on the local service capability layer, and the M2M authentication server stores and maintains a root key resource pool. The local service capability server sends an authentication request message to the M2M authentication server so as to be successfully authenticated by the M2M authentication server and therefore access the M2M platform. The authentication request message carries the preset M2M root key. The M2M authentication server compares the M2M root key and a key in the maintained root key resource pool, confirms that the root key resource pool contains the M2M root key carried in the authentication request message, confirms that the security authentication is successful for the local service capability layer, and returns an authentication response.

Optionally, the local service capability layer may initiates security authentication to the security authentication on an AAA server (Authentication, Authorization, Accounting). Security credential information (credential) is preset on the local service capability layer. When the local service capability layer needs to access the M2M platform, the local service capability server sends an authentication request message to the AAA authentication server so as to pass the authentication of the AAA authentication server and therefore access the M2M platform. The AAA authentication server performs security authentication on the local service capability layer according to the preset security credential information and returns an authentication response.
302. An M2M SP operation system sends charging parameters including different underlying networks to a charging server and the local service capability layer.

Specifically, the M2M SP operation system enables an M2M system to use an underlying network resource by implementing subscription with different underlying network operators and by determining use prices of underlying network resources (such as data traffic, duration, an SMS message, and a multimedia message) via subscription. A conversion ratio of a quantity of convertible service units to each unit of network resources on each underlying network, and tariff of each unit of network resources or each service units are preset in the M2M SP operation system, and the charging parameters, which include the conversion ratio and tariff, of the different underlying networks are sent to the charging server and the local service capability layer by using a proprietary interface of the M2M SP operation system; or the charging parameters are configured during deployment of devices such as the local service capability layer and the charging server; or the charging parameters are configured by using an operation, administration and maintenance (Operation Administration and Maintenance, OAM) server.

The charging parameters may be set as follows:

| **Network identifier** | **Service type** | **Network resource use** | **Service unit conversion** |
|---|---|---|---|
| GSM PLMN ID | GPRS | Data traffic (1 MB) | Service unit (100 units) |
| | | Duration (1 minute) | Service unit (1 unit) |
| | SMS | Quantity (10) | Service unit (1 unit) |
| WCDMA PLMN ID | Data service | Data traffic (1 MB) | Service unit (50 units) |
| | | Duration (5 minutes) | Service unit (1 unit) |
| | SMS | Quantity (10) | Service unit (1 unit) |
| WiMAX NAP ID | Data service | Data traffic (1 MB) | Service unit (50 units) |
| | | | |
| WiFi BSSID | Data service | Data traffic (1 MB) | Service unit (10 units) |
| TISPAN Access Line Identification | Data service | Data traffic (1 MB) | Service unit (1 unit) |

Optionally, in a case in which the subscription between the M2M SP operation system and the underlying network operator does not specify the quantity of convertible service units for each unit of network resources, or the underlying network operator changes, in a subsequent use period, the quantity of convertible service units for each unit of network resources, for example, a network resource price is increased to control traffic and decrease network congestion, or an underlying network identifier, a service identifier, and the like are changed when an underlying network of the M2M SP operation system is changed or upgraded, the M2M SP operation system periodically pushes updated charging parameters to the charging server and the local service capability layer.

Optionally, after receiving the charging parameters, the local service capability layer may also create a charging parameter resource on the local service capability layer, where the charging parameter resource includes the charging parameters of one or a plurality of underlying networks, for example, the charging parameter of a GSM network and the charging parameter of a WCDMA network, where the charging parameter corresponding to each underlying network includes a network identifier and a service type of the underlying network and further includes a conversion ratio of a network resource to a service unit, so that a device user or an NA user queries the charging parameters of various underlying networks from the local service capability layer by using an API interface and determines an underlying network that needs to be used.
303. A request initiator sends a registration request to the local service capability layer.

Specifically, the request initiator sends the registration request to the local service capability layer, requesting for registering an M2M application of the request initiator with the local service capability layer. The registration request may carry a request initiator identifier, and the local service capability layer may determine whether the registration request is a registration request of a d device or D' device according to the request initiator identifier. Optionally, the registration request may further carry a determining identifier such as a variable of a Boolean type, where TRUE indicates that the registration request is the registration request of the d device, the D' device, or a NA, and FALSE indicates that the registration request is not the registration request of the d device, the D' device, or the NA.
304. The local service capability layer processes the registration request and allocates an application resource identifier to the request initiator.

Specifically, the local service capability layer creates an application resource for the request initiator and allocates the application resource identifier according to the registration request of the request initiator.

Optionally, to distinguish an application of the request initiator and a local application of the local service capability layer, the local service capability may allocate a special application resource identifier for the created application resource, for example, dA_1 or D'A#2, return the special application resource identifier to the request initiator, and identify that the request initiator is the d device or D' device according to the special application resource identifier when the local service capability layer subsequently obtains the special application resource identifier from a resource access request of the request initiator;
optionally, the local service capability layer may also use a request initiator identifier carried when the request initiator initiates registration, as the application resource identifier, and locally maintain a series of application resource identifier lists, and the local service capability layer subsequently compares the application resource identifier carried in the resource access request of the request initiator and the application resource identifier lists to determine whether the request initiator is the d device or D' device;
optionally, before step 303, the request initiator may acquire the previously created charging parameter resource from the local service capability layer by using the API interface, determine, from the charging parameter resource, an underlying network used by one or a plurality of applications and the charging parameter corresponding to the underlying network, and send a resource locator URI of the charging parameter to the local service capability layer by using the registration request. The local service capability layer may set the resource locator URI of the charging parameter carried in the registration request in the created application resource, so that the local service capability layer subsequently is linked to the charging parameter according to the URI and determines charging data of the request initiator according to the charging parameter.

Optionally, after receiving the registration request of the d device, the D device, or the NA, and after determining that the registration request is the registration request of the d device, the D' device, or the NA according to the request initiator identifier carried in the registration request of the request initiator, the local service capability layer queries a device subscription data entity (such as an operation support system or an M2M platform) of the M2M SP operation system about whether the request initiator has rights to use a underlying network and a service type, and specific one or a plurality of bottom-layer networks and service types that are used. The device subscription data entity such as the M2M SP operation platform sends the bottom-layer network and the service type for which the request initiator has rights to use to the local service capability layer. After receiving the underlying network and the service type that the request initiator has the rights to use, the local service capability layer maintains, in a charging parameter set, one or a plurality of charging parameters for the bottom-layer network and the service type that the request initiator may use, or searches a charging parameter resource for one or a plurality of charging parameter URIs of the underlying network and the service type that the request initiator may use, and sets the URI as an attribute of the application resource in the created application resource.
305. The local service capability layer returns a registration success response to the request initiator, where the registration success response includes an application resource identifier of an application resource innovated for the request initiator.
306. The request initiator sends a resource access request to the local service capability layer.

Specifically, the request initiator sends the resource access request to the local service capability layer to request for accessing a resource, where the resource access request includes a remote resource access identifier such as http:// www.m2msp.com/<sclBase1>/applications/<app1>, and further includes an application resource identifier of the request initiator such as http://10.138.12.35/<sclBase2>/applications/<app2>.
307. The local service capability layer parses the resource access request and determines that current resource access is a charging event if the current resource access needs to use an underlying network.

Specifically, the local service capability layer determines whether the resource access request is a remote resource access request according to a destination identifier in the access request. For example, it is determined that the accessed resource is a remote resource if a prefix of a destination URI is different from the prefix of the local service capability layer URI (for example, a prefix of the foregoing destination URI is www.m2msp.com while a prefix of the local service capability layer URI is 10.138.12.35). If the accessed resource is the remote resource, it is determined that the underlying network needs to be used, the current resource access request is recorded as the charging event, and an identifier of the resource access request is recorded, where the identifier may be a session identifier of the current resource access request or a flag carried in the current resource access request, for example, a token code. The local service capability layer records the access request and traces an access response to the access request according to the recorded identifier, so as to determine, according to a status code in the access response, whether charging data needs to be determined and sent to the charging server.

According to the ETSI M2M standards, a request and a response may be carried by the HTTP protocol and the CoAP protocol. For the HTTP protocol, a connection is established for each HTTP request. When determining that the access request carried by the HTTP protocol is a charging event, the local service capability layer records the session identifier of the resource access request and traces, according to the session identifier, the response to the resource access request with the session identifier. For the CoAP protocol, a CoAP resource access request carries a token (token) of the resource access request, and the local service capability layer traces a CoAP response with the token.

As mentioned above, the local service capability layer may further locally acquire, according to the application resource identifier carried in the resource access request, the application resource corresponding to the application resource identifier, determine whether the request initiator has rights to use the underlying network according to a preset charging parameter corresponding to the application resource, and further determine one or more underlying networks and service types specifically used by the request initiator.

When more than one underlying network may be used by the request initiator, selection of an underlying network may be determined according to an underlying network capability of the main service capability layer corresponding to the destination identifier. If the main service capability layer corresponding to the destination identifier supports a plurality of underlying networks, a communication selection module (Communication Selection, CS) of the local service capability layer may be used to determine an bottom-layer network specifically used for the current resource access request. For example, when the local service capability layer is an M2M platform, the communication selection module may select a non-congested underlying network according to a congestion degree of an underlying network; or the communication selection module selects an underlying network that successfully communicates previously or selects an underlying network except an underlying network that fails to communicate.

A service type may be further determined according to content of the resource access request of the request initiator. When the request initiator requests for deleting the resource or requests for a service with a small data amount such as triggering a dormant device to go online, a message is carried by using a service type such as an SMS. When the request initiator requests for a service with a large data amount such as acquiring a resource and updating a resource, a data service is used to carry the message. For an underlying network that supports only the data service, for example, WiMAX and Wi-Fi, it is determined that the data service is used to carry the message if this type of underlying network is selected.

For online charging (Online charging), the local service capability layer sends estimated charging data to the charging server, where the estimated charging data includes an underlying network identifier, a service type, and usage of an underlying network resource, or an underlying network identifier, a service type, and usage of a service unit. The charging server determines that the access request may continue to be implemented according to a user account balance of the request initiator. After receiving a success response from the charging server, the local service capability layer performs a subsequent step.
308. The local service capability layer forwards the resource access request to the main service capability layer according to a destination identifier.

Specifically, the local service capability layer communicates, according to the destination identifier in the resource access request, with the main service capability layer use of the mId interface over the bottom-layer network, and forwards the resource access request to the main service capability layer. The main service capability layer refers to an M2M network entity that stores the resource that the request initiator needs to acquire and may be an M2M platform or an M2M gateway.
309. The local service capability layer receives a successful access response sent by the main service capability layer, where the successful access response includes a success state code.

Specifically, after receiving the resource access request, the main service capability layer performs a related resource access operation, for example, creation, acquiring, an update, deletion, subscription, and device management, and sends the successful access response to the local service capability layer. The access response includes a session identifier or a Token code. For the resource access request for acquiring the remote resource, the resource access response further includes the remote resource requested for acquiring.
310. The local service capability layer determines charging data for resource access of the request initiator.

Specifically, the local service capability layer determines the charging data for remote resource access of the request initiator according to an underlying network, a service type, and a use condition of a network resource used by the resource access request and according to an underlying network, a service type, and a use condition of a service unit used by a remote resource access response.

Specifically, the charging data for the remote resource access may include an underlying network identifier, a service type, usage of the underlying network resource, or an underlying network identifier, a service type, usage of the service unit, or usage of the service unit of the bottom-layer network used by the current resource access request.

Optionally, the local service capability layer determines the usage of the underlying network resource according to an underlying network message carrying the resource access request and the resource access response, for example, the underlying network message uses two smss, or 3 MB data traffic, or duration of 0.5 minute. Further, the usage of the service unit may be converted from the usage of the underlying network resource according to a charging parameter preset by the local service capability layer, for example, usage of two smss on a GSM underlying network corresponds to two service units, 3 MB data traffic corresponds to 300 service units, and 0.5-minute duration corresponds to 0.5 service unit. In this way, processing of the charging server is simplified and charging data of various underlying networks is shielded.

For a resource acquiring request, because the resource acquiring request may include only a destination identifier and a request initiator identifier, a resource acquiring request message occupies a small network resource amount; however, a corresponding resource acquiring response carries the corresponding resource, resulting in a large network resource amount occupied by a response message. Therefore, the local service capability layer separately determines network resource usage of the request initiator according to the resource acquiring request and the received response message.

For a resource update request, because the resource update request includes an updated resource, a request message occupies a larger network resource amount; however, a corresponding resource update response may carry only a successful response code. Therefore, the local service capability layer may separately determine the network resource usage of the request initiator according to the resource update request and the resource update response.

When determining the network resource usage of the resource update request, a service capability layer may determine the network resource usage of the request initiator upon receiving the resource access request sent by the request initiator; and may also store the resource access request in a historical data retention module (HDR, History and Data Retention), and acquire the previously stored resource access request from the historical data retention module after receiving the resource access response sent by the main service capability layer, and determine and record the network resource usage of the request initiator according to the resource access request and the response corresponding to the resource access request.
311. The local service capability layer forwards the successful access response to the request initiator.

Specifically, the local service capability layer forwards the successful access response sent by the main service capability layer to the request initiator.
312. The local service capability layer sends the charging data to the charging server.

Specifically, the local service capability layer may send an underlying network identifier, a service type, and usage of an underlying network resource, or an underlying network identifier, a service type, and usage of a service unit, or only usage of a service unit, to the charging server, where the usage of the service unit may be converted from the usage of the underlying network resource according to a charging parameter preset by the local service capability layer. By using the charging parameter, usage of network resources of different underlying networks and different service types may be converted to a universally-charged service unit, thereby helping the charging server charge the request initiator. The local service capability layer may also directly send the usage of the underlying network resource to the charging server, and the charging server converts the usage of the underlying network resource to the universally-charged service unit according to the charging parameter, and then charges the request initiator.
313. The charging server charges the request initiator according to the charging data.
314. The charging server returns a charging response to the local service capability layer.

The foregoing solution avoids impact on the underlying network and may implement underlying network charging for the request initiator without modifying a network element on the underlying network. In another aspect, the present invention is not limited thereto. By modifying the network element on the underlying network, the underlying network charging for a non-subscribed device may also be implemented. For example, on a 3GPP network, the local service capability layer sends the charging data to the charging server by using an MTC-IWF (Machine type communication-interworking function). For example, after receiving the resource access request from the request initiator, an M2M gateway of the local service capability layer determines that the resource access request needs to use a 3GPP underlying network and/or a service type. The M2M gateway sends the resource access request to an entity (for example, SGSN and S-GW) with an underlying network charging trigger function (CTF), where the resource access request carries a communication identifier, indicating that the communication is the communication of a non-subscribed device. The entity with the underlying network charging trigger function (CTF) such as the SGSN or the S-GW sends the charging data to a service charging server by using the MTC-IWF and an M2M platform.

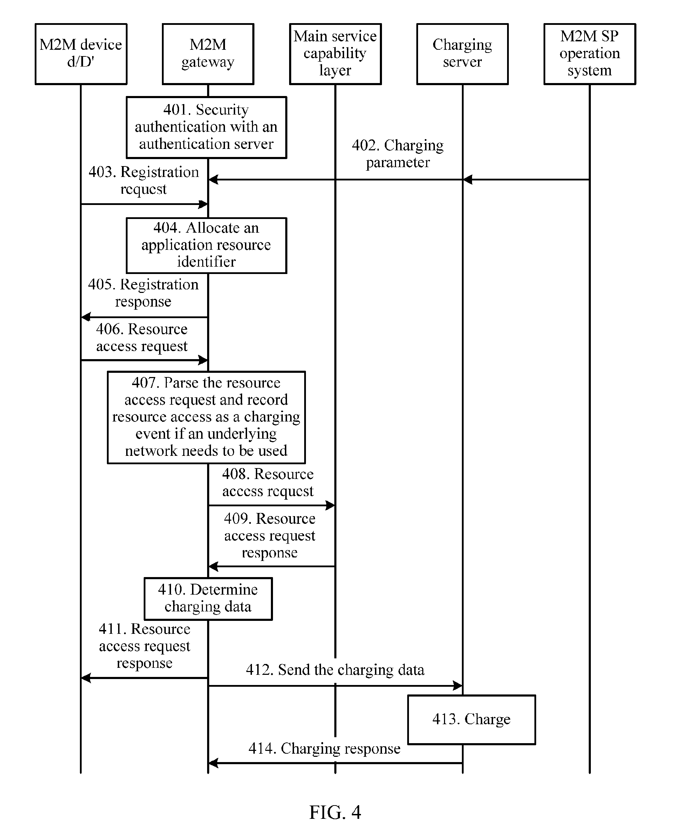

The following describes a charging method for machine-to-machine communications according to an embodiment of the present invention from a perspective in which a local service capability layer is an M2M gateway and a request initiator is an M2M device d or D'. Referring to FIG. 4, a diagram of signaling exchanges in a charging method according to still another embodiment of the present invention is provided, including:
401. The M2M gateway and an authentication server perform security authentication.
402. An M2M SP operation system sends a charging parameter to the M2M gateway and a charging server.
403. The M2M device d or D' sends a registration request to the M2M gateway.
404. The M2M gateway processes the registration request and allocates an application resource identifier to the M2M device d or D'.
405. The M2M gateway returns a registration success response to the M2M device d or D'.
406. The M2M device d or D' sends a resource access request to the M2M gateway.
407. The M2M gateway parses the resource access request and determines that current resource access is a charging event if the current resource access needs to use an underlying network.
408. The M2M gateway forwards the resource access request to a main service capability layer according to a destination identifier.
409. The M2M gateway receives a successful access response sent by the main service capability layer, where the successful access response includes a success state code.
410. The M2M gateway determines charging data for the resource access of the M2M device d or D'.
411. The M2M gateway forwards the successful access response to the M2M device d or D'.
412. The M2M gateway sends the charging data to the charging server.
413. The charging server charges the M2M device d or D' according to the charging data.
414. The charging server returns a charging response to the M2M gateway.

For specific details of the foregoing process, reference may be made to the detailed introduction to FIG. 3.

In the foregoing charging method for machine-to-machine communications provided by the embodiment of the present invention, because the M2M gateway is integrated with the charging trigger function, the M2M gateway may determine the charging data according to the resource access request sent by the M2M device and the resource access response returned by the main service capability layer, and send the charging data to the charging server for charging the M2M device, thereby addressing a charging problem of the M2M device in a case in which the M2M device does not subscribe to the underlying network.

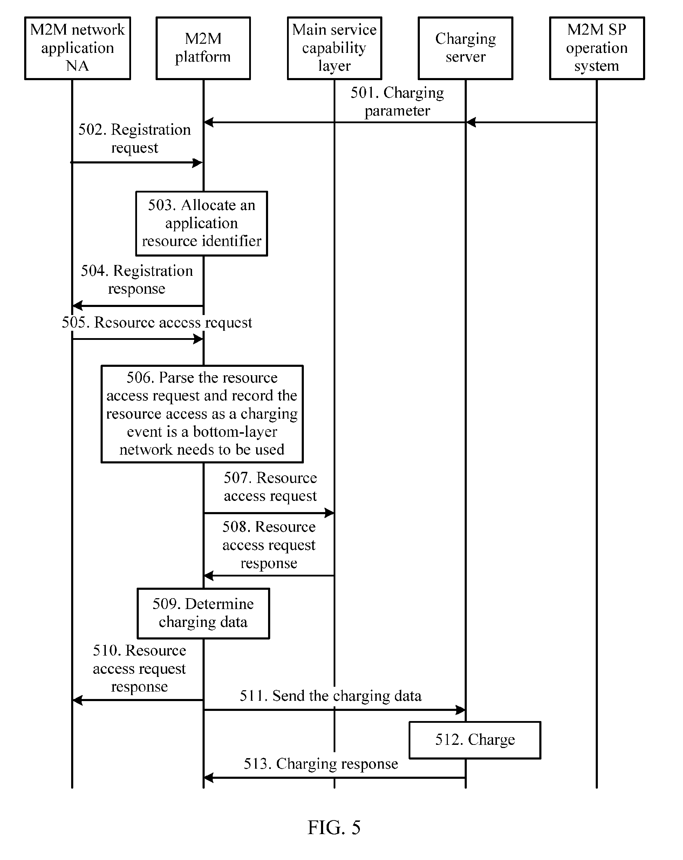

The following describes a charging method for machine-to-machine communications according to an embodiment of the present invention from a perspective in which a local service capability layer is an M2M platform and a request initiator is a network application NA, where the M2M platform is operated by an M2M SP, is secure and reliable, and does not need to perform authentication with an authentication server first. Referring to FIG. 5, a diagram of signaling exchanges in a charging method according to still another embodiment of the present invention is provided, including:
501. An M2M SP operation system sends an underlying network charging parameter to a charging server and the M2M platform.
502. The M2M network application NA sends a registration request to the M2M platform.
503: The M2M platform processes the registration request and allocates an application resource identifier to the M2M network application NA.
504. The M2M platform returns a registration success response to the M2M network application NA.
505. The M2M network application NA sends a resource access request to the M2M platform.
506. The M2M platform parses the resource access request and determines that current resource access is a charging event if the current resource access needs to use an underlying network.
507. The M2M platform forwards the resource access request to a main service capability layer according to a destination identifier.
508. The M2M platform receives a successful access response sent by the main service capability layer, where the successful access response includes a successful response code.
509. The M2M platform determines charging data for the remote resource access of the M2M device d or D'.
510. The M2M platform forwards the successful access response to the M2M network application NA.
511. The M2M platform sends the charging data to the charging server.
512. The charging server charges the M2M network application NA according to the charging data.
513. The charging server returns a charging response to the M2M platform.

It should be noted that, reference may be made to steps 402 to 414 in FIG. 3 for a specific manner of steps 501 to 513.

In the foregoing charging method for machine-to-machine communications provided by the embodiment of the present invention, because the M2M platform is integrated with the charging trigger function, the M2M platform may determine the charging data according to the resource access request sent by the M2M network application NA and the access response returned by the main service capability layer, and send the charging data to the charging server for charging the M2M network application NA, thereby addressing a charging problem of the M2M network application NA in a case in which the M2M network application NA does not subscribe to the underlying network.

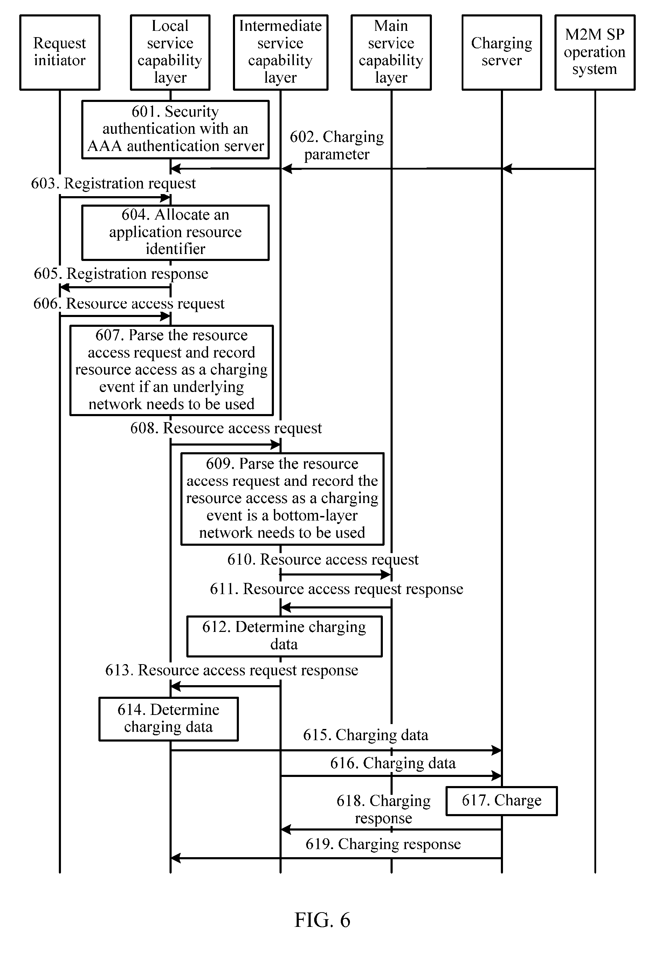

FIG. 6 is a diagram of signaling exchanges in a charging method for machine-to-machine communications according to still another embodiment of the present invention, including:
601. A local service capability layer and an intermediate service capability layer perform security authentication on an authentication server.

It should be noted that, an M2M platform does not require the security authentication when acting as the local service capability layer or the intermediate service capability layer. The intermediate service capability layer refers to a network entity that provides a service capability layer and is not a first network entity to receive a resource access request from a request initiator, and may be an M2M gateway, the M2M platform, and the like.
602. An M2M SP operation system sends a charging parameter including an underlying network to a charging server and the local service capability layer, and may further send the charging parameter to the intermediate service capability layer.
603. A request initiator sends a registration request to the local service capability layer.
604. The local service capability layer creates an application resource for the request initiator and allocates an application resource identifier.
605. The local service capability returns a registration response to the request initiator.

After the registration is successful, the local service capability layer may further send an application resource declaration message to the intermediate service capability layer, for saving a URI of the created application resource on the intermediate service capability layer.

Further, when the intermediate service layer has not received the charging parameter sent by the M2M SP operation system, the local service capability layer may also add a resource locator URI of one or more charging parameters in the application resource declaration message, and the intermediate capability layer may query, by using the application resource declaration message and according to one or more resource locator URIs of the one or more charging parameters, an underlying network used by the application and the corresponding charging parameter.
606. The request initiator sends a resource access request to the local service capability layer.
607. The local service capability layer parses the access request and determines that current resource access is a charging event if the current resource access needs to use the underlying network.

For specific operations of steps 601 to 607, reference may be made to the description of steps 301 to 307 in FIG. 3.
608. The local service capability layer forwards the resource access request to the intermediate service capability layer.
609. The intermediate service capability layer parses the resource access request and records the current resource access as a charging event if the current resource access needs to use the underlying network.

Specifically, the intermediate service capability layer is an intermediate node in multi-hop communication, also needs to use the underlying network when a remote resource, requested by the request initiator for accessing, requires participation of the local service capability layer and the intermediate service capability layer, and generates charging data.
610. The intermediate service capability layer forwards the remote resource access request to a main service capability layer.
611. The main service capability layer returns a resource access request response to the intermediate service capability layer.
612. The intermediate service capability layer determines charging data for the request initiator.

Specifically, data communication from the main service capability layer to the intermediate service capability layer and from the intermediate service capability layer to the local service capability layer both needs to use the underlying network, and the intermediate service capability layer may calculate only the charging data for the data communication from the intermediate service capability layer to the main service capability layer. The charging data may include a used underlying network identifier, a service type, and usage of a related underlying network resource.
613. The intermediate service capability layer forwards a remote resource access response to the local service capability layer.
614. The local service capability layer determines charging data for the request initiator.

Specifically, data communication from the main service capability layer to the intermediate service capability layer and from the intermediate service capability layer to the local service capability layer both needs to use the underlying network, and the local service capability layer may calculate only the charging data for the data communication from the local service capability layer to the intermediate service capability layer. The charging data may include an underlying network identifier of the used underlying network, a service type, and usage of a related underlying network resource.
615. The local service capability layer sends the charging data to the charging server.

Specifically, the local service capability layer sends the charging data for the data communication from the local service capability layer to the intermediate service capability layer to the charging server, so that the charging server charges the request initiator.
616. The intermediate service capability layer sends the charging data to the charging server.

Specifically, the intermediate service capability layer sends the charging data for the data communication from the intermediate service capability layer to the main service capability layer to the charging server, so that the charging server charges the request initiator.
617. The charging server charges the request initiator.
618. The charging server returns a charging response to the intermediate service capability layer.
619. The charging server returns a charging response to the local service capability layer.

It should be noted that, sending the charging data by the local or intermediate service capability layer to the charging server is not subject to a strict sequence limitation; likewise, returning the charging response by the charging server to the local or intermediate service capability layer is also not subject to a strict sequence limitation, and the sequence may be alternated.

In addition, it should be noted that, the local service capability layer and the intermediate capability layer may be an M2M gateway and may also be an M2M platform, and the request initiator may be an M2M device d or D' or an M2M network application NA. According to an M2M communications requirement, a plurality of intermediate service capability layers may be provided.

It should be noted that, for a related charging operation for the intermediate service capability layer, reference may be made to the description of a charging operation for the local service capability layer in FIG. 3.

In the foregoing charging method for machine-to-machine communications provided by the embodiment of the present invention, because the local service capability layer and the intermediate service capability layer are both integrated with the charging trigger function, the local service capability layer and the intermediate service capability layer may determine, according to the resource access request sent by the request initiator or the resource access response of the main service capability layer, their respective charging data for underlying network use, and send the charging data to the charging server for charging the request initiator, thereby addressing a charging problem of the request initiator in a case in which the request initiator does not subscribe to the underlying network.

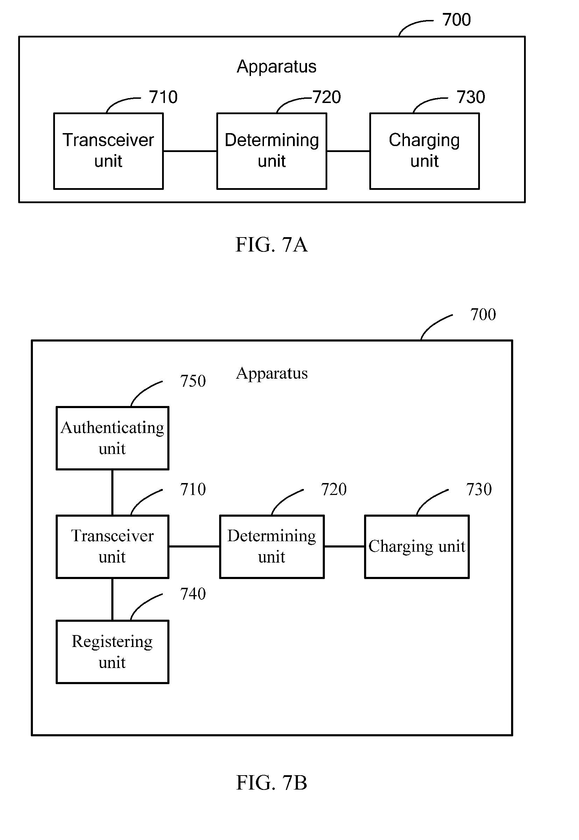

FIG. 7A is a schematic structural diagram of a charging apparatus according to an embodiment of the present invention, including:
a transceiver unit 710, configured to receive a resource access request, where the resource access request includes a destination identifier;
a determining unit 720, configured to determine, according to the resource access request, that current resource access needs to use an underlying network and the current resource access is a charging event, where the determining unit 720 includes a recording unit, configured to record an identifier of the resource access request, where the identifier of the resource access request is a session identifier of a session that carries the resource access request or a flag carried in the resource access request;
the transceiver unit 710, further configured to forward the resource access request to a main service capability layer according to the destination identifier, and further configured to receive a resource access response with respect to the resource access request; and
a charging unit 730, configured to determine charging data for remote resource access of the request initiator, and further configured to send the charging data to a charging server, so that the charging server charges for the remote resource access of the request initiator according to the charging data.

Specifically, the charging apparatus for machine-to-machine communications in the embodiment of the present invention is an M2M gateway or an M2M platform.

Because the charging apparatus according to the embodiment of the present invention is embedded with the charging trigger function, the charging apparatus determines the charging data of the request initiator according to the remote resource access request initiated by the request initiator and sends the charging data to the charging server for charging the request initiator, thereby addressing a charging problem of the request initiator in a case in which the request initiator does not subscribe to the underlying network.

FIG. 7B is a schematic structural diagram of a charging apparatus according to another embodiment of the present invention, including:
a transceiver unit 710, configured to receive a resource access request, where the resource access request includes a destination identifier;
a determining unit 720, configured to determine, according to the resource access request, that current resource access needs to use an underlying network and the current resource access is a charging event, where the determining unit 720 includes a recording unit, configured to record an identifier of the resource access request, where the identifier of the resource access request is a session identifier of a session that carries the resource access request or a flag carried in the resource access request;
the transceiver unit 710, further configured to forward the resource access request to a main service capability layer according to the destination identifier, and further configured to receive a resource access response with respect to the resource access request, where the transceiver unit 710 includes a first receiving unit, configured to receive an underlying network charging parameter sent by an M2M SP operation system, where the first receiving unit includes a creating sub-unit, configured to create a charging parameter resource for the underlying network according to the charging parameter sent by the M2M SP operation system;
a charging unit 730, configured to determine charging data for the current resource access of the request initiator, and further send the charging data to a charging server, so that the charging server charges for the remote resource access of the request initiator according to the charging data;
a registering unit 740, configured to receive a registration request sent by the request initiator, create an application resource for the request initiator according to the registration request, and allocate an application resource identifier, and further configured to set, according to a charging parameter carried in the registration request, a resource locator URI of the charging parameter in the created application resource; and
an authenticating unit 750, configured to perform security authentication with an authentication server.

Specifically, the authenticating unit 750 is configured to send an authentication request to an AAA authentication server, and receive an authentication success response returned by the AAA authentication server; and is specifically further configured to send an authentication request to an M2M authentication server, where the authentication request includes a preset M2M root key or preset M2M security credential information, and receive an authentication success response returned by the M2M authentication server.

It should be noted that, the foregoing charging apparatus for machine-to-machine communications may be an M2M gateway or an M2M platform.

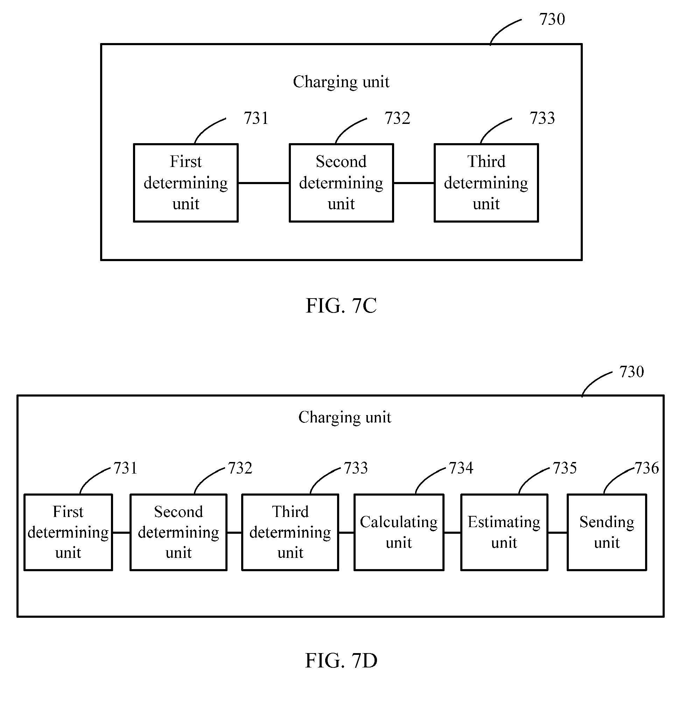

Referring to FIG. 7C, a schematic diagram of a charging unit of a charging apparatus according to an embodiment of the present invention is provided, where the charging unit 730 includes:
a first determining unit 731, configured to determine, according to a preset charging parameter corresponding to the application resource identifier, the underlying network used for the current resource access; or acquire subscription data of the request initiator from a subscription data entity according to the application resource identifier of the request initiator, and determine the underlying network used for the current resource access according to the subscription data; and/or
a second determining unit 732, configured to separately determine usage of a network resource of the resource access request and usage of a network resource of the resource access response with respect to the resource access request, where the usage of the network resource is a sum of the usage of the network resource of the resource access request and the usage of the network resource of the resource access response; and
a third determining unit 733, configured to determine a service type used by the current resource access request according to the determined underlying network used for the resource access and/or according to access content of the current resource access request.

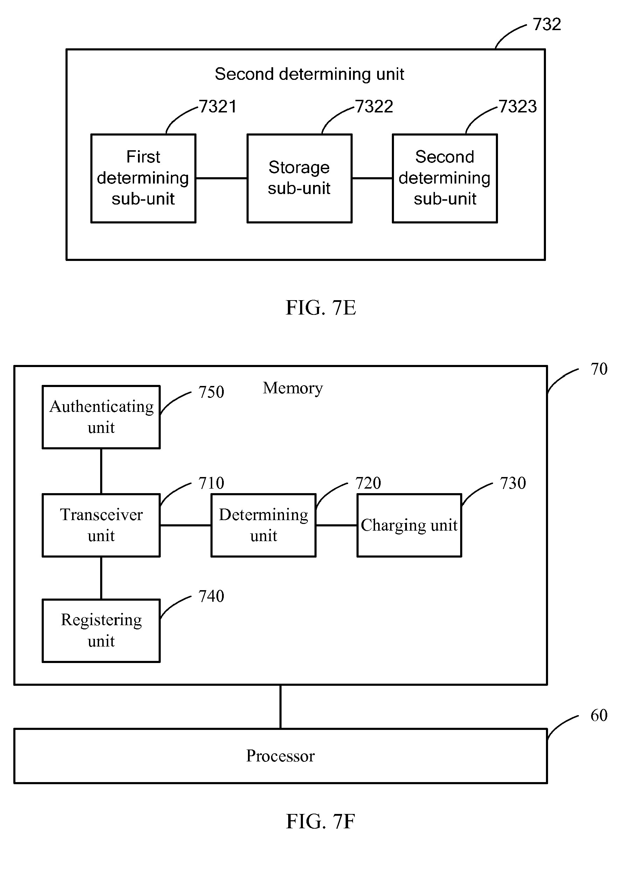

A second determining sub-unit 732 shown in FIG. 7E includes:
a first determining sub-unit 7321, configured to determine the usage of the resource access request after determining that the current resource access is a charging event; or
a storage sub-unit 7322, configured to store the resource access request; and
a 7323 second determining sub-unit, configured to acquire the stored resource access request after receiving the resource access response with respect to the resource access request, and determine the usage of the resource access request.

As shown in FIG. 7D, the charging unit 730 further includes:
a calculating unit 734, configured to calculate usage of a service unit according to the determined usage of the network resource and the determined underlying network used for the current resource access;
an estimating unit 735, configured to determine, according to the resource access request, the underlying network used for the current resource access, a service type used for the current resource access, estimated usage of the network resource for the current resource access and/or estimated usage of the service unit; and
a sending unit 736, configured to send a charging request including the used underlying network or the usage of the network resource, and the service type to the charging server, or
configured to send a charging request including the used underlying network or the usage of the network resource and the service type and the usage of the service unit to the charging server. For the foregoing charging apparatus, because the charging apparatus is integrated with the charging trigger function, the charging apparatus may determine, according to the resource access request sent by the request initiator, charging data for each used underlying network, and send the charging data to the charging server for charging the request initiator, thereby addressing a charging problem of the request initiator in a case in which the request initiator does not subscribe to the underlying network.

FIG. 7F is a schematic structural diagram of still another charging apparatus according to an embodiment of the present invention, where the charging apparatus includes a memory 70 and a processor 60. The memory 70 is configured to store each unit illustrated in FIG. 7A to FIG. 7E, the processor 60 is connected to the memory 70, and each unit running in the memory 70 implements a corresponding function of each unit in the memory 70. The function of each unit in the memory 70 in FIG. 7F is the same as a function of each unit in FIG. 7A to FIG. 7E, which is not further described herein.

An implementation manner of a processing function of each unit included in the foregoing charging apparatus has been described in the foregoing method embodiments, and is not further described herein again. In addition, on an M2M network, an M2M platform may be each computer and a device with a processor. An M2M gateway and an M2M terminal are not strictly distinguished in terms of devices; for example, a device functioning as a gateway may also function as a terminal. In addition, various terminal devices, such as a mobile phone, a computer, a PDA, a laptop computer, a remote controller, a domestic appliance, various instruments and meters, and a sensor, may all function as the gateway or the terminal on the M2M network. In the foregoing unit embodiment, the included units are divided only in accordance with functional logic, but are not limited to the above division as long as the corresponding function may be realized; in addition, a specific name of each functional unit is only for differentiation from each other, and is not intended to limit the protection scope of the present invention. A function of each functional unit for achieving the charging method and charging apparatus may all be completed in a way in which a processor of the M2M gateway or the M2M platform runs each unit.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM: Read-Only Memory), or a random access memory (RAM: Random Access Memory).

To sum up, the foregoing descriptions are merely exemplary embodiments of the present invention, but are not intended to limit the protection scope of the present invention. Any modification, equivalent replacement, and improvement made without departing from the spirit and principle of the present invention shall fall within the protection scope of the present invention.

## Claims

1. A charging method, comprising:
receiving, by an M2M service capability layer, a resource access request, wherein the resource access request comprises a destination identifier;
determining, by the service capability layer according to the resource access request, that current resource access needs to use an underlying network and the current resource access is a charging event;
sending, by the service capability layer, the resource access request to a main service capability layer according to the destination identifier;
receiving, by the service capability layer, a resource access response with respect to the resource access request;
determining, by the service capability layer, charging data for the current resource access; and
sending, by the service capability layer, the charging data to a charging server, so that the charging server charges for the resource access request of a request initiator according to the charging data.

2. The method according to claim 1, wherein the determining that the current resource access is a charging event specifically comprises: recording, by the service capability layer, an identifier of the resource access request, wherein the identifier of the resource access request is a session identifier of a session carrying the resource access request or a flag carried in the resource access request.

3. The method according to claim 1 or 2, wherein the charging data comprises the underlying network or usage of a network resource used for the current resource access, and the resource access request further carries an application resource identifier of the request initiator; and the determining charging data for the current resource access specifically comprises:
determining, according to a preset charging parameter corresponding to the application resource identifier, the underlying network used for the current resource access; or acquiring subscription data of the request initiator from a subscription data entity according to the application resource identifier of the request initiator, and determining the underlying network used for the current resource access according to the subscription data; and/or
separately determining usage of the resource access request and usage of the resource access response with respect to the resource access request, wherein the usage of the network resource is a sum of the usage of the resource access request and the usage of the resource access response.

4. The method according to claim 3, wherein the charging data further comprises a service type used for the current resource access, and the determining charging data for the current resource access further comprises:
determining, according to the determined underlying network used for the current resource access and/or according to access content of the resource access request, a service type used by the resource access request.

5. The method according to claim 3, wherein the determining usage of the resource access request specifically comprises:
determining the usage of the resource access request after the determining that the current resource access is a charging event; or
the method further comprises: storing the resource access request; and the determining usage of the resource access request specifically comprises: after receiving the resource access response with respect to the resource access request, acquiring the stored resource access request and determining the usage of the resource access request.

6. The method according to any one of claims 3 to 5, wherein the charging data further comprises usage of a service unit, and the determining charging data for the current resource access further comprises:
calculating the usage of the service unit according to the determined usage of the network resource and the determined underlying network used for the current resource access.

7. The method according to claim 1 or 2, wherein the charging data comprises the underlying network used for the current resource access, usage of a network resource, and a service type, and usage of a service unit; and before the sending the resource access request to a main service capability layer according to the destination identifier, the method further comprises:
determining, according to the resource access request, the underlying network used for the current resource access, a service type used for the current resource access, estimated usage of the network resource for the current resource access and/or estimated usage of the service unit used for the current resource access; and sending, to the charging server, a charging request comprising the used underlying network or the usage of the network resource, and the service type, or
a charging request comprising the used underlying network or the usage of the network resource, and the service type, and the usage of the service unit.

8. The method according to any one of claims 1 to 7, wherein the method further comprises: receiving an underlying network charging parameter sent by an M2M SP operation system.

9. The method according to claim 8, wherein the method further comprises: creating a charging parameter resource for the underlying network according to the charging parameter sent by the M2M SP operation system.

10. The method according to any one of claims 1 to 9, wherein the method further comprises:
receiving a registration request sent by the request initiator; and
creating, according to the registration request, an application resource for the request initiator and allocating the application resource identifier.

11. The method according to claim 10, wherein the method further comprises: the registration request further carries the underlying network charging parameter determined by the request initiator according to the charging parameter resource, and the creating, according to the registration request, an application resource for the request initiator further comprises:
setting a resource locator URI of the determined underlying network charging parameter in the created application resource.

12. The method according to any one of claims 1 to 11, wherein the method further comprises:
sending an authentication request to an M2M authentication server, wherein the authentication request comprises a preset M2M root key or preset M2M security credential information; and
receiving an authentication success response returned by the M2M authentication server.

13. The method according to any one of claims 1 to 12, wherein the sending the charging data to a charging server comprises:
sending the charging data to the charging server by using a machine type communication interworking function module MTC-IWF.

14. A charging apparatus, comprising:
a transceiver unit, configured to receive a resource access request, wherein the resource access request comprises a destination identifier;
a determining unit, configured to determine, according to the resource access request, that current resource access needs to use an underlying network and the current resource access is a charging event;
the transceiver unit, further configured to forward the resource access request to a main service capability layer according to the destination identifier, and further configured to receive a resource access response with respect to the resource access request; and
a charging unit, configured to determine charging data for the current resource access; and
send the charging data to a charging server.

15. The apparatus according to claim 14, wherein the determining unit comprises:
a recording unit, configured to record an identifier of the resource access request, wherein the identifier of the resource access request is a session identifier of a session carrying the resource access request or a flag carried in the resource access request.

16. The apparatus according to claim 14 or 15, wherein the resource access request further carries an application resource identifier of a request initiator, and the charging unit comprises:
a first determining unit, configured to determine, according to a preset charging parameter corresponding to the application resource identifier, the underlying network used for the current resource access; or acquire subscription data of the request initiator from a subscription data entity according to the application resource identifier of the request initiator, and determine the underlying network used for the current resource access according to the subscription data; and/or
a second determining unit, configured to separately determine usage of a network resource for the resource access request and usage of the network resource for the resource access response with respect to the resource access request, wherein the usage of the network resource is a sum of the usage of the network resource of the resource access request and the usage of the network resource of the resource access response.

17. The apparatus according to claim 16, wherein the charging unit further comprises:
a third determining unit, configured to determine a service type used by the resource access request according to the determined underlying network used for the current resource access and/or according to access content of the resource access request.

18. The apparatus according to claim 16, wherein the second determining unit comprises:
a first determining sub-unit, configured to determine the usage of the resource access request after determining that the current resource access is a charging event; or
a storage sub-unit, configured to store the resource access request, and
a second determining sub-unit, configured to acquire the stored resource access request after receiving the resource access response with respect to the resource access request, and determine the usage of the resource access request.

19. The apparatus according to any one of claims 16 to 18, wherein the charging unit further comprises:
a calculating unit, configured to calculate usage of a service unit according to the determined usage of the network resource and the determined underlying network used for the current resource access.

20. The apparatus according to claim 14 or 15, wherein the charging unit further comprises:
an estimating unit, configured to determine, according to the resource access request, the underlying network used for the current resource access, the service type used for the current resource access, estimated usage of the network resource for the current resource access and/or estimated usage of the service unit used for the current resource access; and
a sending unit, configured to send a charging request comprising the used underlying network or the usage of the network resource, and the service type to the charging server, or
configured to send a charging request comprising the used underlying network or the usage of the network resource, and the service type, and the usage of the service unit to the charging server.

21. The apparatus according to any one of claims 14 to 20, wherein the transceiver unit comprises:
a first receiving unit, configured to receive an underlying network charging parameter sent by an M2M SP operation system.

22. The apparatus according to claim 21, wherein the first receiving unit comprises:
a creating sub-unit, configured to create a charging parameter resource for the underlying network according to the charging parameter sent by the M2M SP operation system.

23. The apparatus according to any one of claims 14 to 23, wherein the apparatus further comprises:
a registering unit, configured to receive a registration request sent by the request initiator; and
create, according to the registration request, an application resource for the request initiator and allocate the application resource identifier.

24. The apparatus according to claim 23, wherein the registering unit comprises:
a setting sub-unit, configured to set, according to a charging parameter carried in the registration request, a resource locator URI of the charging parameter in the created application resource.

25. The apparatus according to any one of claims 14 to 24, wherein the apparatus further comprises:
an authenticating unit, configured to send an authentication request to an M2M authentication server, wherein the authentication request comprises a preset M2M root key or preset M2M security credential information; and
receive an authentication success response returned by the M2M authentication server.
